# FASCICULE DE BREVET EUROPEEN

(11) **EP 3 003 811 B1**
(45) Date de publication et mention de la délivrance du brevet: **05.07.2017**
(21) Numéro de dépôt: 14725103.7
(22) Date de dépôt: 15.05.2014
(51) Int. Cl.: B60W 30/12, B60W 30/16, B60K 28/06, B60W 50/00

(54) **PROCEDE DE FONCTIONNEMENT D'UN VEHICULE EN MODE MANUEL ET EN MODE AUTONOME**
BETRIEBSVERFAHREN FÜR EIN FAHRZEUG IN EINEM MANUELLEN MODUS UND EINEM AUTONOMEN MODUS
OPERATING METHOD FOR A VEHICLE IN MANUAL MODE AND IN AUTONOMOUS MODE

(30) Priorité: 27.05.2013 FR 1354745
(43) Date de publication de la demande: 13.04.2016
(73) Titulaire: Renault S.A.S., 92100 Boulogne-Billancourt (FR)
(72) Inventeur: DESNOYER, François, F-75014 Paris (FR); LANGLOIS, Sabine, F-75015 Paris (FR); HORPS, Frédéric, F-78150 Le Chesnay (FR)
(86) Numéro de dépôt international: PCT/EP2014/059903
(87) Numéro de publication internationale: WO 2014/191210

(56) Documents cités:
- EP-A1- 2 314 490
- DE-A1-102011 082 375

## Description

L'invention concerne un procédé et un système automatisé pour superviser un fonctionnement de véhicule en mode manuel et en mode autonome de conduite.

Les systèmes d'aide à la conduite, par exemple les régulateurs de vitesse à contrôle de distance, permettent à un conducteur humain de se décharger d'une partie de son activité de conduite sur des systèmes automatisés. Ces systèmes sont actuellement largement répandus sur le marché, et leurs fonctions sont progressivement associées les unes aux autres pour rendre le véhicule complètement autonome. Un tel type de véhicule permet au conducteur de bénéficier de services de délégation de conduite sur toute ou partie de la durée de son parcours. Ces services de délégation de conduite peuvent notamment être proposés lorsque les conditions de trafic sont denses et la vitesse moyenne du véhicule très abaissée. La manière dont le conducteur délègue la conduite et dont le système rend la main au conducteur sont tout à fait essentielles pour la qualité de la prestation, ainsi que pour la sûreté de fonctionnement du système. Il existe des procédures d'activation et de désactivation de systèmes de contrôle longitudinal du véhicule comme dans le cas d'un régulateur de vitesse ou d'un système à contrôle de distance. Il existe aussi des procédures d'activation et de désactivation de systèmes de contrôle latéral comme ceux de détection de franchissement de ligne ou de maintien de trajectoire. Pour chacun de ces systèmes pris séparément, il est assez facile pour le conducteur de savoir si c'est lui qui a le contrôle ou si c'est l'automatisme. Un système de véhicule autonome du type auquel s'applique l'invention, propose de coupler le contrôle longitudinal du véhicule avec le contrôle latéral. L'entrée en mode autonome se fait alors en lâchant les mains du volant, puis les pieds des pédales (ou inversement), dans des actions qui ne sont pas toujours parfaitement synchronisées, avec pour effet de créer des situations dans lesquelles le conducteur ne sait pas quel est l'état de pilotage du véhicule par les automatismes.

Pour illustrer l'état antérieur de la technique, le document US8260482 divulgue une interface utilisateur pour afficher un état interne de système de conduite autonome. En mode manuel, l'interface indique à l'utilisateur que le système est prêt à fonctionner en mode autonome en fonction de différentes informations comprenant notamment une localisation géographique du véhicule. Le procédé et le système divulgués présentent cependant plusieurs problèmes parmi lesquels celui pour l'utilisateur de connaître précisément le mode de conduite dans lequel il se trouve à chaque instant et celui pour le système de gérer sans ambiguïté chacun des modes de conduite.

Le document EP2314490 divulgue un procédé de commande du fonctionnement d'un système d'assistance totalement automatique dans lequel, à l'entrée d'au moins une condition de prise en charge, il apparaît une invitation de prise en charge par le conducteur qui mène à une désactivation du système d'assistance au conducteur.

L'invention a pour objet un procédé de fonctionnement d'un véhicule comportant au moins une étape de conduite en mode manuel dans laquelle un déplacement longitudinal et un déplacement latéral sont contrôlés par un conducteur humain et au moins une étape de conduite en mode autonome dans laquelle le déplacement longitudinal et le déplacement latéral sont contrôlés par un système automatisé.

Pour répondre aux problèmes de l'état antérieur de la technique, au moins une étape de conduite en mode semi autonome est activée dans le procédé à partir du mode autonome par une reprise en main par le conducteur humain soit du déplacement longitudinal de sorte que le système automatisé continue à contrôler le déplacement latéral, soit du déplacement latéral de sorte que le système automatisé continue à contrôler le déplacement longitudinal.

Particulièrement, une ou plusieurs étapes d'arrêt automatique activées en mode semi autonome consistent à freiner le véhicule lorsque le conducteur humain ne reprend pas rapidement en main celui du déplacement latéral et du déplacement longitudinal qui continue à être contrôlé par le système automatisé.

De préférence, une ou plusieurs étapes d'alarme activées en mode semi autonome consistent à demander au conducteur humain de reprendre rapidement en main celui du déplacement latéral et du déplacement longitudinal qui continue à être contrôlé par le système automatisé.

Avantageusement, l'étape de conduite en mode manuel est activée à partir du mode semi autonome lorsque le conducteur humain reprend en main le déplacement longitudinal et le déplacement latéral.

Avantageusement aussi, l'étape de conduite en mode autonome est activée à partir du mode manuel lorsque dans une étape de mode autonome activable, le conducteur humain lâche son contrôle à la fois sur le déplacement longitudinal et sur le déplacement latéral.

Plus particulièrement, l'étape de mode autonome activable, est activée par réception d'un signal indiquant une volonté explicite du conducteur humain de passer en mode autonome sous condition de mode autonome possible.

Favorablement, l'étape de conduite en mode autonome est activée à partir du mode semi autonome lorsque le conducteur humain relâche rapidement son contrôle sur le déplacement longitudinal ou sur le déplacement latéral.

L'invention a aussi pour objet un programme d'ordinateur comprenant des instructions de code de programme pour l'exécution des étapes du procédé selon l'invention lorsque ledit programme est exécuté sur un ordinateur.

L'invention a encore pour objet un système automatisé comprenant un ordinateur dans lequel est installé un programme d'ordinateur selon l'invention.

L'invention a enfin pour objet un véhicule, notamment un véhicule automobile, comprenant un système automatisé selon l'invention.

L'invention sera mieux comprise à l'aide d'exemples de mise en oeuvre d'étapes de procédé conforme à l'invention en référence aux dessins annexés, dans lesquels :
- la figure 1 montre des étapes de procédé conforme à l'invention en mode manuel ;
- la figure 2 montre des étapes de procédé conforme à l'invention en mode autonome ;
- la figure 3 montre des étapes de procédé conforme à l'invention en mode semi autonome ;
- la figure 4 montre des étapes d'une variante de procédé conforme à l'invention en mode semi autonome.

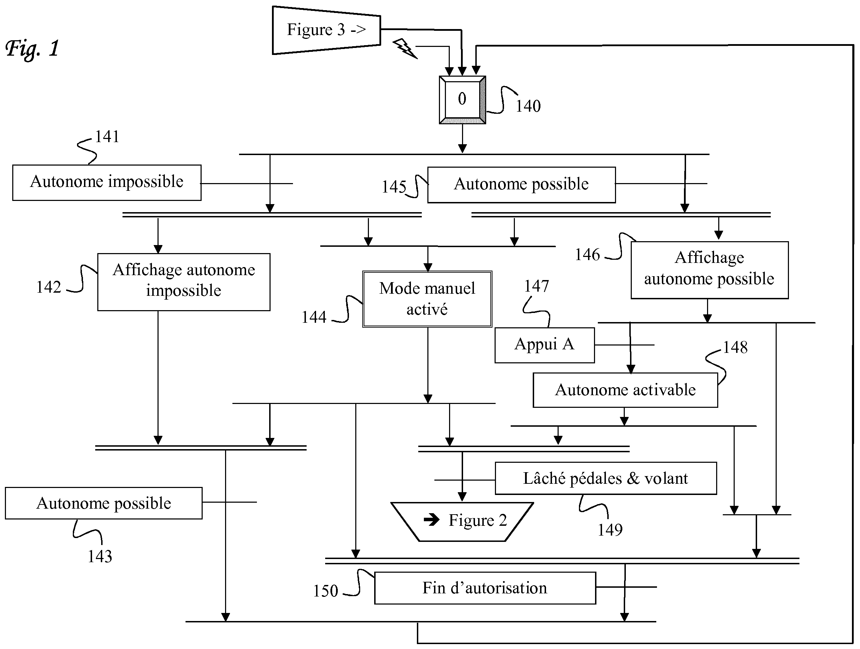

Dans le procédé de fonctionnement d'un véhicule expliqué en référence à la figure 1, une étape 144 de conduite en mode manuel consiste à laisser un conducteur humain contrôler un déplacement longitudinal et un déplacement latéral du véhicule. Le déplacement longitudinal est alors contrôlé de manière habituelle au moyen d'organes de commande manuelle de vitesse du véhicule tels que les pédales d'accélérateur et de freins Le déplacement latéral est de même contrôlé de manière habituelle au moyen d'organes de commande manuelle de direction du véhicule tels que le volant.

L'étape 144 reproduit ainsi un fonctionnement habituel de véhicule qui, en absence de l'invention pourrait en quelque sorte être constamment activée.

Un véhicule, notamment un véhicule automobile conforme à l'invention, comprend un système automatisé dans lequel des actionneurs de commande automatique, connus par ailleurs, sont pilotés par un ordinateur dans lequel est installé un programme d'ordinateur comprenant des instructions de code de programme pour l'exécution des étapes du procédé expliqué ci-dessous lorsque le programme est exécuté sur l'ordinateur. L'ordinateur est typiquement un calculateur embarqué dans le véhicule, capable de communiquer avec d'autres calculateurs embarqués via un réseau de terrain tel qu'un réseau CAN, LIN ou autre et de communiquer optionnellement mais non nécessairement avec des équipements distants tels que des satellites de positionnement associés à un appareil embarqué de navigation ou tels que des bases de données centralisées accessibles par un appareil de télécommunication.

Le procédé est à présent expliqué au moyen d'une représentation grafcet dans laquelle on rappelle qu'une transition à la suite d'une ou plusieurs étapes précédentes, est validée par une détection d'un ou plusieurs événements prédéfinis lorsque tout ou partie de ladite ou desdites étapes précédentes sont actives et qu'une validation de ladite transition active une ou plusieurs étapes suivantes et désactive ladite ou lesdites étapes précédentes, conformément aux conventions de représentation grafcet. On comprendra que cette représentation a été choisie pour la clarté qu'elle procure et qu'elle n'est en rien limitative. Une représentation sous forme d'organigramme informatique, de circuit logique combinatoire ou de tout autre mécanisme matériel, est de manière identique couvert par les explications qui vont suivre, le procédé n'étant pas limité au-delà des actions qui sont exécutées dans les étapes qui lui sont essentielles et des conditions à l'exécution de ces actions.

Dans le procédé mis en oeuvre par exemple en faisant intervenir le système automatisé indiqué ci-dessus, l'étape 144 de conduite en mode manuel est de préférence activée par défaut à partir d'une étape initiale 140, quelques soient les modes de conduite possibles, au démarrage du véhicule par le conducteur humain.

A partir de l'étape 140, une transition 145 est validée lorsque la conduite du véhicule en mode autonome est possible et une transition 141 est validée lorsqu'à l'inverse, la conduite du véhicule en mode autonome n'est pas possible.

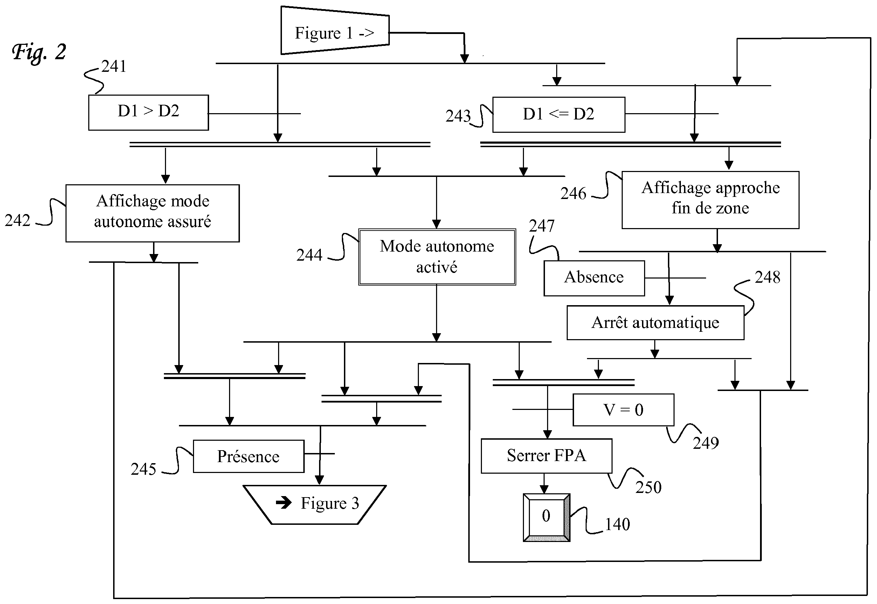

Les étapes à présent décrites en référence à la figure 1, ont pour rôle essentiel de superviser un passage de mode manuel de conduite vers un mode autonome de conduite expliqué plus tard en référence à la figure 2. Dans le mode autonome de conduite, le déplacement longitudinal et le déplacement latéral du véhicule sont contrôlés par le système automatisé sans intervention du conducteur humain.

Les conditions de validation de la transition 145 sont par exemple consignées dans une table en mémoire du système automatisé. A titre purement illustratif et non exhaustif, elles peuvent comprendre une condition de vitesse du véhicule inférieure à un seuil prédéfini, une localisation du véhicule dans une zone appropriée à la conduite en mode autonome.

Parallèlement à l'étape 144 de mode manuel activé qui est activée quelle que soit celle des transitions 141 et 145 qui est validée, une étape 146 d'affichage de conduite en mode autonome possible est activée lorsque la transition 145 est validée et une étape 142 d'affichage de conduite en mode autonome impossible est activée lorsque la transition 141 est validée. Le terme d'affichage dans les étapes 142 et 146, à prendre dans son acception la plus large, peut désigner tant une signalisation visuelle que sonore, permanente ou à la demande qu'une simple absence de signalisation en étape 142 par exemple tant que la signalisation de l'étape 146 n'est pas présente.

A partir d'une conjonction logique de l'étape 142 et de l'étape 144, une transition 143 est validée lorsque la conduite du véhicule en mode autonome devient possible. A partir d'une conjonction logique de l'étape 146 et de l'étape 144, une transition 150 est validée lorsqu'un passage de conduite du véhicule en mode autonome n'est plus autorisé. La fin d'autorisation de passage en mode autonome qui valide la transition 150 peut résulter d'une fin de mode autonome possible ; elle peut résulter aussi d'autres événements comme nous le verrons par la suite.

Une disjonction logique de validation de la transition 143 ou de la transition 150, réactive l'étape initiale 140 pour ré aiguiller l'automatisme dans la branche du mode manuel de fonctionnement qui convient.

A partir de l'étape 146 activée sous condition de mode autonome possible, une transition 147 est validée par réception dans le système automatisé, d'un signal indiquant une volonté explicite du conducteur humain de passer en mode autonome. Le signal peut résulter d'un appui sur un bouton A, d'un déplacement de manette au volant par le conducteur humain, d'une sélection sur un écran tactile ou d'une reconnaissance vocale univoque d'un ordre oral prononcé par le conducteur humain accompagnée possiblement d'une séquence de confirmation.

Une validation de la transition 147 active une étape 148 de mode autonome activable. Dans l'étape 148, le système automatisé signale au conducteur humain qu'il est prêt à prendre le contrôle de la conduite du véhicule et lui demande de lâcher rapidement les pédales et le volant. Tant que le conducteur humain maintient ses mains sur le volant ou son pied sur l'une des pédales, l'ordinateur du système automatisé prend en compte les commandes du conducteur humain qui en résultent pour piloter les actionneurs de commande automatique. Simultanément, l'ordinateur du système automatisé arme une temporisation pour mesurer la durée pendant laquelle le conducteur humain maintient ses mains sur le volant ou son pied sur l'une des pédales.

Si la durée mesurée atteint un délai prédéfini, généralement très court de l'ordre de la seconde, la transition 150 est validée de façon à ce que le lâcher des commandes par le conducteur humain soit à brève échéance après sa demande explicite de passer en mode autonome. Il est important que le passage en mode autonome n'interviennent pas trop tard, à un moment qui pourrait surprendre le conducteur humain ou qui ne serait plus en accord avec les conditions de passage en mode autonome à l'instant auquel la demande explicite a été formulée par le conducteur humain.

A partir d'une conjonction logique de l'étape 142 et de l'étape 144, une transition 149 est validée lorsque le conducteur humain lâche son contrôle à la fois sur les pédales en relation avec le déplacement longitudinal et sur le volant en relation avec le déplacement latéral.

Une validation de la transition 149 active alors l'étape 244 de conduite en mode autonome expliqué maintenant en référence à la figure 2.

Dans le mode autonome de conduite, le système automatisé assure la totalité du contrôle tant du déplacement longitudinal que du déplacement latéral du véhicule en vue de reposer les membres inférieurs et supérieurs du conducteur humain et de le libérer de certaines tâches fastidieuses comme celles de fixer constamment son compteur de vitesse et les panneaux routiers pour s'assurer de ne pas enfreindre une limitation.

Le conducteur humain peut poser ses pieds où bon lui semble comme avec un régulateur de vitesse classique. A la différence d'un régulateur de vitesse classique pour lequel la consigne de vitesse est positionnée par le conducteur humain puis maintenue constante jusqu'à ce que le conducteur humain la modifie, la consigne de vitesse est ici adaptée en fonction des limitations de vitesse indiquées par les cartographies de l'appareil de navigation et de la vitesse d'un véhicule précédent dont la distance est évaluée par un télémètre radar ou une caméra.

De même, le conducteur humain peut poser ses mains où bon lui semble car le contrôle de trajectoire et de stabilité classique est agrémenté d'un mécanisme de reconnaissance de voie sur la chaussée par une caméra en combinaison avec un parcours donné par l'appareil de navigation.

A partir de l'étape 244 de mode autonome activé, une transition 245 est validée par une manifestation de présence du conducteur humain lorsqu'il veut reprendre le contrôle du véhicule en mode manuel de conduite.

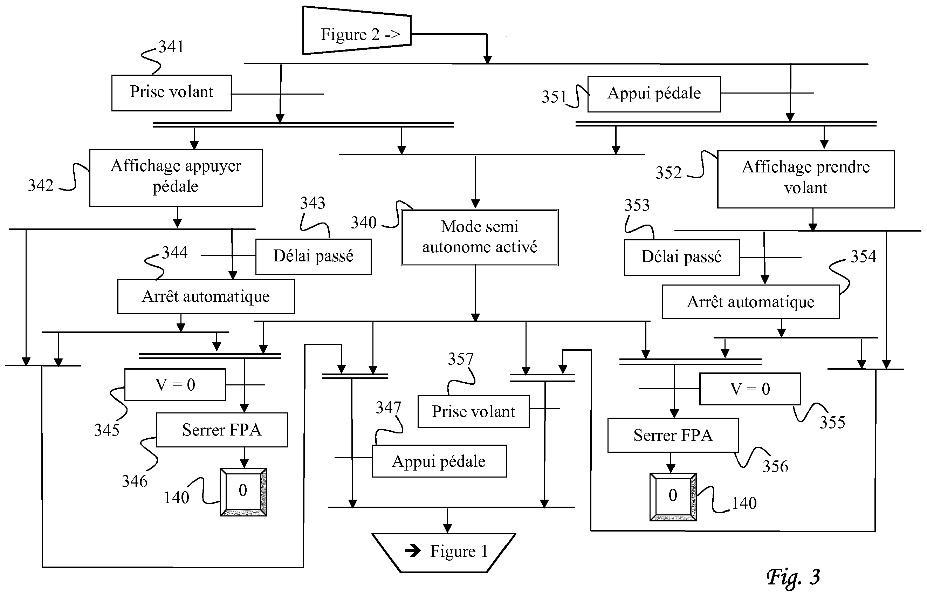

Une validation de la transition 245 active une étape 340 de conduite en mode semi autonome expliqué à présent en référence à la figure 3.

Plus précisément, la transition 245 regroupe en fait deux transitions de reprise en main par le conducteur humain. Une transition 341 est validée lorsque le système automatisé détecte un couple appliqué au volant par le conducteur humain pour reprendre le contrôle du déplacement latéral. Une transition 351 est validée lorsque le système automatisé détecte un effort appliqué sur la pédale de frein ou d'accélérateur par le conducteur humain pour reprendre le contrôle du déplacement longitudinal.

Une validation de la transition 341 active une étape 342 d'alarme en conjonction logique avec l'étape 340 de conduite en mode semi autonome. L'étape 342 d'alarme consiste à demander au conducteur humain de reprendre rapidement en main le déplacement longitudinal qui continue momentanément à être contrôlé par le système automatisé, en appuyant sur la pédale de frein ou d'accélérateur, au moyen d'un affichage visuel et/ou d'un message sonore.

Simultanément dans l'une des étapes 340 ou 342, le programme d'ordinateur arme une temporisation pour mesurer un délai qui sépare la reprise des pédales de la reprise du volant.

Une transition 343 est validée lorsque le délai est dépassé.

Une validation de la transition 343 active une étape 344 d'arrêt automatique qui consiste à freiner le véhicule lorsque le conducteur humain ne reprend pas rapidement en main le déplacement longitudinal qui continue à être contrôlé par le système automatisé. Pendant le freinage du véhicule en étape 344, le système automatisé prend en compte la commande de direction qui résulte du couple appliqué sur le volant par le conducteur humain. Le ralentissement du véhicule est suffisamment dissuasif pour inciter le conducteur humain à reprendre rapidement le contrôle intégral du véhicule.

Une transition 345 est validée lorsque le véhicule atteint une vitesse nulle.

Une validation de la transition 345 active une étape 346 qui consiste à serrer le frein de parking automatique et à retourner dans l'étape initiale 140.

A tout moment à partir de l'étape 342 ou de l'étape 344 tant que l'étape 346 n'est pas atteinte, une transition 347 est validée lorsque le système automatisé détecte un appui sur la pédale de frein ou d'accélérateur.

Une validation de la transition 347 à partir de l'étape 340 de conduite en mode semi autonome en conjonction avec les étapes 342 et 344, réactive l'étape 144 de conduite en mode manuel expliquée précédemment en référence à la figure 1.

Une validation de la transition 351 active une étape 352 d'alarme en conjonction logique avec l'étape 340 de conduite en mode semi autonome. L'étape 352 d'alarme consiste à demander au conducteur humain de reprendre rapidement en main le déplacement latéral qui continue momentanément à être contrôlé par le système automatisé, en agrippant le volant, au moyen d'un affichage visuel et/ou d'un message sonore.

Simultanément dans l'une des étapes 340 ou 352, le programme d'ordinateur arme une temporisation pour mesurer un délai qui sépare la reprise du volant de la reprise des pédales.

Une transition 353 est validée lorsque le délai est dépassé.

Une validation de la transition 353 active une étape 354 d'arrêt automatique qui consiste à freiner le véhicule lorsque le conducteur humain ne reprend pas rapidement en main le déplacement latéral qui continue à être contrôlé par le système automatisé. Pendant le freinage du véhicule en étape 344, le système automatisé prend en compte la commande de freinage qui résulte de la pression appliquée sur la pédale de frein par le conducteur humain. Cependant une détection de pression sur la pédale d'accélération est sans effet sur le freinage imposé dans l'étape 354. Le ralentissement du véhicule est suffisamment dissuasif pour inciter le conducteur humain à reprendre rapidement le contrôle intégral du véhicule.

Une transition 355 est validée lorsque le véhicule atteint une vitesse nulle.

Une validation de la transition 355 active une étape 356 qui consiste à serrer le frein de parking automatique et à retourner dans l'étape initiale 140.

A tout moment à partir de l'étape 352 ou de l'étape 354 tant que l'étape 356 n'est pas atteinte, une transition 357 est validée lorsque le système automatisé détecte un couple appliqué manuellement sur le volant.

Une validation de la transition 357 à partir de l'étape 340 de conduite en mode semi autonome en conjonction avec les étapes 352 et 354, réactive l'étape 144 de conduite en mode manuel expliquée précédemment en référence à la figure 1.

Dans une variante de réalisation, la transition 355 et l'étape 356 peuvent être remplacées respectivement par la transition 345 et l'étape 356 qui leur sont semblables.

Ainsi le retour en mode manuel de conduite pour sortir du mode autonome de conduite en passant par le mode semi autonome, est activé lorsque le conducteur humain reprend en main le déplacement longitudinal et le déplacement latéral. Le passage transitoire dans le mode autonome est éphémère si le conducteur humain reprend en main simultanément le déplacement longitudinal et le déplacement latéral, les transitions 347 et 357 étant immédiatement validées à la suite des transitions 341 et 351.

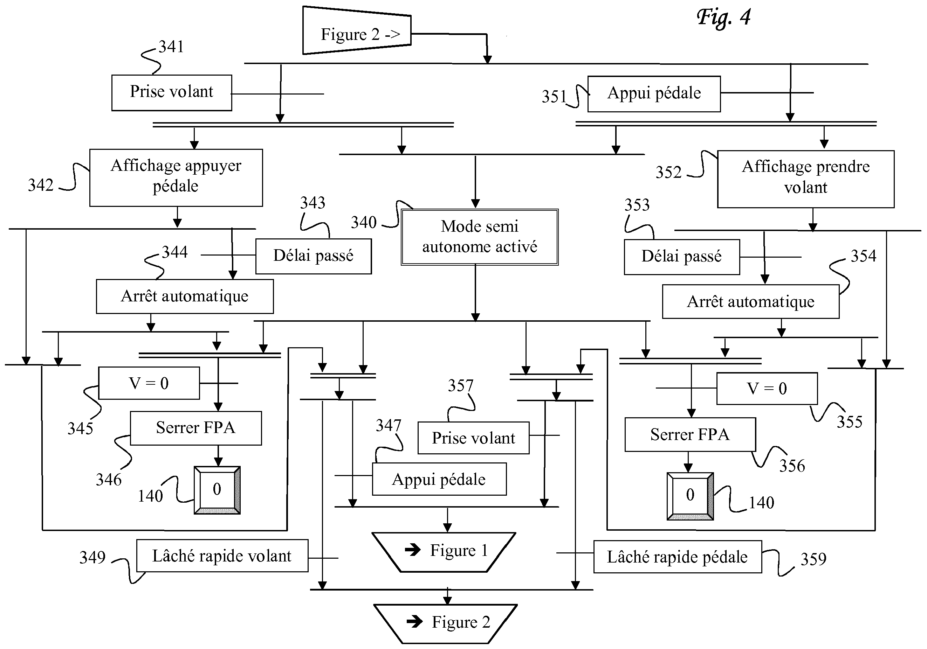

La variante de mise en oeuvre du procédé présentée en référence à la figure 4, offre la possibilité de revenir au mode autonome de conduite lorsque la reprise en main d'une commande par le conducteur humain, n'est pas suffisamment affirmée pour marquer une volonté ferme du conducteur humain de retourner en mode manuel de conduite.

Dans l'étape 342, le système automatisé mémorise temporairement un niveau maximal de couple appliqué au volant depuis la validation de la transition 341 et arme une temporisation à courte durée, par exemple de l'ordre de trois secondes.

Une transition 349 de lâcher rapide de volant, est validée lorsque le niveau maximal de couple mémorisé temporairement est inférieur à un seuil prédéfini et que le conducteur humain relâche rapidement son contrôle sur le déplacement latéral avant épuisement de la courte durée de la temporisation.

Dans l'étape 352, le système automatisé mémorise temporairement un niveau maximal de pression appliquée sur l'une des pédales depuis la validation de la transition 351 et arme une temporisation à courte durée, par exemple de l'ordre de trois secondes.

Une transition 359 de lâcher rapide de pédale, est validée lorsque le niveau maximal de pression mémorisé temporairement est inférieur à un seuil prédéfini et que le conducteur humain relâche rapidement son contrôle sur le déplacement longitudinal avant épuisement de la courte durée de la temporisation.

Une validation de la transition 349 ou de la transition 359 à partir de l'étape 340 de conduite en mode semi autonome, réactive alors l'étape 244 de conduite en mode autonome expliquée ci-dessus en référence à la figure 2.

La sortie du mode autonome est réalisable à tout instant à l'initiative du conducteur humain en passant par le mode semi autonome, irréversible dans la variante de la figure 3 ou réversible sous certaines conditions dans la variante de la figure 4.

D'autres sorties du mode autonome peuvent être envisagées sans sortir du cadre de la présente invention, quelle que soit la structure du mode autonome choisie.

Le mode autonome illustré par la figure 2 comprend d'une part une étape 242 d'affichage de mode autonome assuré, activée par une transition 241 qui est validée lorsque le véhicule est à une distance D1 supérieure à une distance D2 de fin de zone qui nécessite de repasser en mode manuel.

L'exemple de mode autonome parmi d'autres possibles, illustré par la figure 2 comprend d'autre part une étape 246 d'affichage d'approche de fin de zone, activée par une transition 243 qui est validée lorsque le véhicule est à une distance D1 inférieure ou égale à la distance D2 de fin de zone qui nécessite de repasser en mode manuel.

La transition 245 expliquée précédemment pour activer le mode semi autonome, est éligible à la validation indifféremment à partir d'une conjonction logique de l'étape 242 et de l'étape 244 ou d'une conjonction logique de l'étape 244 et de l'étape 246.

La transition 245 pour activer le mode semi autonome, est aussi éligible à la validation à partir d'une conjonction logique de l'étape 244 et d'une étape 248 d'arrêt automatique qui est activée par une transition 247 validée en absence d'intervention du conducteur humain alors que le véhicule approche une fin de zone de conduite possible en mode autonome comme affiché en étape 246.

Une transition 249 est validée lorsque le véhicule atteint une vitesse nulle.

Une validation de la transition 249 active une étape 250 qui consiste à serrer le frein de parking automatique et à retourner dans l'étape initiale 140.

A tout moment à partir de l'étape 246 ou de l'étape 248 tant que l'étape 250 n'est pas atteinte, la transition 245 est validée lorsque le système automatisé détecte un couple appliqué au volant ou un appui sur la pédale de frein ou d'accélérateur.

Une validation de la transition 245 à partir de l'étape 244 de conduite en mode autonome en conjonction avec l'une ou l'autre des étapes 246 et 248, active l'étape 340 de conduite en mode semi autonome qui provoque un ralentissement plus prononcé du véhicule qu'en étape 248 de façon à inciter fortement le conducteur humain à reprendre la totalité du contrôle de conduite du véhicule.

## Revendications

1. Procédé de fonctionnement d'un véhicule comportant au moins une étape (144) de conduite en mode manuel dans laquelle un déplacement longitudinal et un déplacement latéral sont contrôlés par un conducteur humain et au moins une étape (244) de conduite en mode autonome dans laquelle le déplacement longitudinal et le déplacement latéral sont contrôlés par un système automatisé, dans lequel :
- au moins une étape (340) de conduite en mode semi autonome est activée à partir du mode autonome par une reprise en main par le conducteur humain soit (351) du déplacement longitudinal de sorte que le système automatisé continue à contrôler le déplacement latéral, soit (341) du déplacement latéral de sorte que le système automatisé continue à contrôler le déplacement longitudinal ; et
- une ou plusieurs étapes (344, 354) d'arrêt automatique activées en mode semi autonome consistent à freiner le véhicule lorsque le conducteur humain ne reprend pas rapidement (343, 353) en main celui du déplacement latéral et du déplacement longitudinal qui continue à être contrôlé par le système automatisé.

2. Procédé selon la revendication 1, comprenant une ou plusieurs étapes (342, 352) d'alarme activées en mode semi autonome consistant à demander au conducteur humain de reprendre rapidement en main celui du déplacement latéral et du déplacement longitudinal qui continue à être contrôlé par le système automatisé.

3. Procédé selon l'une des revendications précédentes, dans lequel ladite au moins une étape (144) de conduite en mode manuel est activée à partir du mode semi autonome lorsque le conducteur humain reprend en main (347, 357) le déplacement longitudinal et le déplacement latéral.

4. Procédé selon l'une des revendications précédentes, dans lequel ladite au moins une étape (244) de conduite en mode autonome est activée à partir du mode manuel lorsque dans une étape (148) de mode autonome activable, le conducteur humain lâche (149) son contrôle à la fois sur le déplacement longitudinal et sur le déplacement latéral.

5. Procédé selon la revendication 4, dans lequel ladite étape (148) de mode autonome activable, est activée par réception (147) d'un signal indiquant une volonté explicite du conducteur humain de passer en mode autonome sous condition (145) de mode autonome possible.

6. Procédé selon l'une des revendications précédentes, dans lequel ladite au moins une étape (244) de conduite en mode autonome est activée à partir du mode semi autonome lorsque le conducteur humain relâche rapidement son contrôle (349, 359) sur le déplacement longitudinal ou sur le déplacement latéral.

7. Programme d'ordinateur comprenant des instructions de code de programme pour l'exécution des étapes du procédé selon l'une des revendications 1 à 6 lorsque ledit programme est exécuté sur un ordinateur.

8. Système automatisé comprenant un ordinateur dans lequel est installé un programme d'ordinateur selon la revendication 7.

9. Véhicule, notamment véhicule automobile, comprenant un système automatisé selon la revendication 8.

## Patentansprüche

1. Funktionsverfahren eines Fahrzeugs mit mindestens einem Schritt (144) zum Fahren im manuellen Modus, in dem eine longitudinale Verlagerung und eine seitliche Verlagerung durch einen menschlichen Fahrer gesteuert werden, und mindestens einem Schritt (244) zum Fahren im autonomen Modus, in dem die longitudinale Verlagerung und die seitliche Verlagerung durch ein automatisiertes System gesteuert werden, in dem:
- mindestens ein Schritt (340) zum Fahren im halbautonomen Modus aus dem autonomen Modus durch eine erneute Übernahme entweder (351) der longitudinalen Verlagerung, so dass das automatisierte System weiterhin die seitliche Verlagerung steuert, oder (341) der seitlichen Verlagerung, so dass das automatisierte System weiterhin die longitudinale Verlagerung steuert, durch den menschlichen Fahrer aktiviert wird; und
- ein oder mehrere Schritte (344, 354) zum automatischen Anhalten, die im halbautonomen Modus aktiviert werden, darin bestehen, das Fahrzeug zu bremsen, wenn der menschliche Fahrer jene der seitlichen Verlagerung und der longitudinalen Verlagerung, die weiterhin durch das automatisierte System gesteuert wird, nicht schnell wieder übernimmt (343, 353).

2. Verfahren nach Anspruch 1 mit einem oder mehreren Alarmschritten (342, 352), die im halbautonomen Modus aktiviert werden, die darin bestehen, vom menschlichen Fahrer zu verlangen, jene der seitlichen Verlagerung und der longitudinalen Verlagerung, die weiterhin durch das automatisierte System gesteuert wird, schnell wieder zu übernehmen.

3. Verfahren nach einem der vorangehenden Ansprüche, in dem der mindestens eine Schritt (144) zum Fahren im manuellen Modus aus dem halbautonomen Modus aktiviert wird, wenn der menschliche Fahrer die longitudinale Verlagerung und die seitliche Verlagerung wieder übernimmt (347, 357).

4. Verfahren nach einem der vorangehenden Ansprüche, in dem der mindestens eine Schritt (244) zum Fahren im autonomen Modus aus dem manuellen Modus aktiviert wird, wenn in einem aktivierbaren Schritt (148) des autonomen Modus der menschliche Fahrer (149) seine Kontrolle sowohl über die longitudinale Verlagerung als auch die seitliche Verlagerung aufgibt.

5. Verfahren nach Anspruch 4, in dem der aktivierbare Schritt (148) des autonomen Modus durch Empfang (147) eines Signals aktiviert wird, das einen expliziten Willen des menschlichen Fahrers angibt, unter der Bedingung (145) eines möglichen autonomen Modus in den autonomen Modus überzugehen.

6. Verfahren nach einem der vorangehenden Ansprüche, in dem der mindestens eine Schritt (244) zum Fahren im autonomen Modus aus dem halbautonomen Modus aktiviert wird, wenn der menschliche Fahrer schnell seine Kontrolle (349, 359) über die longitudinale Verlagerung oder die seitliche Verlagerung wieder aufgibt.

7. Computerprogramm mit Programmcodebefehlen für die Ausführung der Schritte des Verfahrens nach einem der Ansprüche 1 bis 6, wenn das Programm auf einem Computer ausgeführt wird.

8. Automatisiertes System mit einem Computer, in dem ein Computerprogramm nach Anspruch 7 installiert ist.

9. Fahrzeug, insbesondere Kraftfahrzeug, mit einem automatisierten System nach Anspruch 8.

## Claims

1. Method for operating a vehicle comprising at least one step (144) of driving in manual mode in which a longitudinal displacement and a lateral displacement are controlled by a human driver and at least one step (244) of driving in autonomous mode in which the longitudinal displacement and the lateral displacement are controlled by an automated system, in which:
- at least one step (340) of driving in semi-autonomous mode is activated from the autonomous mode by a resumption of control by the human driver either (351) of the longitudinal displacement such that the automated system continues to control the lateral displacement, or (341) of the lateral displacement such that the automated system continues to control the longitudinal displacement; and
- one or more automatic stopping steps (344, 354) activated in semi-autonomous mode consisting in braking the vehicle when the human driver does not quickly take back control (343, 353) of the lateral displacement and of the longitudinal displacement which continues to be controlled by the automated system.

2. Method according to Claim 1, comprising one or more alarm steps (342, 352) activated in semi-autonomous mode consisting in prompting the human driver to quickly take back control of the lateral displacement and of the longitudinal displacement which continues to be controlled by the automated system.

3. Method according to one of the preceding claims, in which said at least one step (144) of driving in manual mode is activated from the semi-autonomous mode when the human driver takes back control (347, 357) of the longitudinal displacement and the lateral displacement.

4. Method according to one of the preceding claims, in which said at least one step (244) of driving in autonomous mode is activated from the manual mode when, in an autonomous mode activatable step (148), the human driver releases (149) his or her control both on the longitudinal displacement and on the lateral displacement.

5. Method according to Claim 4, in which said autonomous mode activatable step (148) is activated by reception (147) of a signal indicating an explicit will of the human driver to switch to autonomous mode provided (145) autonomous mode is possible.

6. Method according to one of the preceding claims, in which said at least one step (244) of driving in autonomous mode is activated from the semi-autonomous mode when the human driver quickly releases his or her control (349, 359) on the longitudinal displacement or on the lateral displacement.

7. Computer program comprising program code instructions for the execution of the steps of the method according to one of Claims 1 to 6 when said program is run on a computer.

8. Automated system comprising a computer in which is installed a computer program according to Claim 7.

9. Vehicle, notably a motor vehicle, comprising an automated system according to Claim 8.
